# EUROPÄISCHE PATENTSCHRIFT

(11) **EP 1 353 060 B1**
(45) Veröffentlichungstag und Bekanntmachung des Hinweises auf die Patenterteilung: **26.04.2006**
(21) Anmeldenummer: 03007565.9
(22) Anmeldetag: 02.04.2003
(51) Int. Cl.: F02M 59/36

(54) **Druckbegrenzungsventil für Einspritzvorrichtungen**
Pressure limiting valve for fuel injection devices
Soupape de limitation de pression pour systèmes d'injection

(30) Priorität: 12.04.2002 DE 10216154
(43) Veröffentlichungstag der Anmeldung: 15.10.2003
(73) Patentinhaber: HYDRAULIK-RING GMBH, 97828 Marktheidenfeld (DE)
(72) Erfinder: Trzmiel, Alfred, 72661 Grafenberg (DE); Neuhaus, Rolf, Dr., 97816 Lohr (DE); Zapf, Friedrich, 97753 Karlstadt (DE)

(56) Entgegenhaltungen:
- EP-A- 0 427 671
- WO-A-00/52322
- WO-A-02/20976
- DE-A- 19 821 768
- US-A- 4 838 233

## Beschreibung

Die Erfindung betrifft ein Druckbegrenzungsventil, insbesondere für Diesel-Hochdruckpumpen von Einspritzvorrichtungen in Kraftfahrzeugen, nach dem Oberbegriff des Anspruches 1.

Druckbegrenzungsventile haben die Aufgabe, bei Überschreiten eines vorgegebenen Druckes in einer ein Medium führenden Druckleitung den Weg für das Medium zur druckentlasteten Bohrung freizugeben, so daß der zu hohe Druck abgebaut werden kann. Der Ventilkörper wird durch den Stößel in seiner Einbaulage gehalten, der durch einen Elektromagneten als Antrieb betätigbar ist. Der Elektromagnet besteht aus einer Vielzahl von Bauteilen, die die Kosten für das Druckbegrenzungsventil erhöhen. Zudem ist die Ansteuerung des Elektromagneten aufwendig.

Beim gattungsgemäßen Druckbegrenzungsventil (WO 02/20976 A) wird ein als Kugel ausgebildeter Ventilkörper durch einen als Kolben ausgebildeten Stößel in seiner Schließlage gehalten. Dieser Kolben ist in einem zweiten Kolben axial verschiebbar geführt, der durch einen Piezoantrieb betätigt wird. Zwischen den beiden Kolben ist ein Hydraulikraum vorgesehen. Außerdem befindet sich zwischen dem ersten Kolben und dem Boden des diesen Kolben aufnehmenden Aufnahmeraumes eine weitere Hydraulikkammer. Durch die besondere Anordnung der beiden Hydraulikkammern bewegen sich die beiden Kolben gegensinnig, wenn der Piezoantrieb betätigt wird. Der auf den Ventilkörper wirkende Kolben steht unter der Kraft einer Druckfeder, durch die er auf dem Ventilkörper aufliegt. Bei Auftreten eines Überdruckes wird der Kolben gegen die Kraft dieser Druckfeder zurückgeschoben, so daß der Ventilkörper vom Ventilsitz abhebt. Das Verschieben dieses Kolbens wird sensorisch erfaßt und zum Einschalten des Piezoantriebes herangezogen, so daß dieser Kolben anschließend durch den Piezoantrieb zurückgefahren wird. Dieses Druckbegrenzungsventil ist konstruktiv sehr aufwendig ausgebildet, dementsprechend teuer in der Fertigung und störanfällig im Einsatz.

Es ist ein Ventil bekannt (US 4 838 233 A), bei dem der Druck des Mediums in Schließrichtung des Ventilkörpers wirkt. Der Ventilkörper wird durch einen Piezoantrieb in seine Offenstellung verschoben, wenn der Kraftstoff in eine Brennkammer eingespritzt werden soll. Wenn der Ventilkörper vom Ventilsitz abhebt, kann das unter Druck stehende Medium durch die geöffnete Bohrung teilweise abströmen. Aufgrund des abnehmenden Druckes verschiebt sich ein kolbenförmiges Stellglied, das mit einer Düsennadel eines Kraftstoffinjektors verbunden ist. Die Düsennadel wird in eine Offenstellung verschoben, so daß der Kraftstoff über die Einspritzdüse in die Brennkammer eingespritzt werden kann. Anschließend wird der Piezoantrieb abgeschaltet, so daß der Ventilkörper in seine Schließstellung zurückgeschoben wird. Das kolbenförmige Stellglied und die mit ihm verbundene Düsennadel wird dann aufgrund des Druckanstieges wieder in die Schließstellung zurückgefahren.

Es ist ferner ein Druckregelventil bekannt (EP-A-0 427 671), mit dem bei der Chromatographie in einer Trennsäule ein bestimmter, vorgegebener Druck aufrechterhalten wird. Je nach Stellung eines Ventilkörpers stellt sich auf der Hochdruckseite ein entsprechender Staudruck ein.

Es ist schließlich ein Ventil bekannt (DE 198 21 768 A), bei dem ein kugelförmiger Ventilkörper durch einen Stößel in Anlage an einem Ventilsitz gehalten wird. Der Stößel liegt an einem Hubkolben an, der gegen die Kraft einer Druckfeder verschiebbar und in einem Druckkolben untergebracht ist. Er liegt an einer Kugelscheibe an, die durch einen Piezoantrieb verschoben werden kann. Dieses Druckbegrenzungsventil ist somit konstruktiv aufwendig ausgebildet, dementsprechend kostenaufwendig in der Herstellung und in der Montage und darüber hinaus störanfällig.

Es ist ferner ein Steuerventil für eine Einspritzpumpe für Kraftstoff bekannt (US 6 386 185 B1), bei dem ein Ventilkörper an einer Seite durch eine Steuervorrichtung und auf der anderen Seite durch den Piezoantrieb mit dem Steuerkolben belastet wird. Soll ein Einspritzvorgang gestartet werden, wird mit dem Piezoantrieb der Ventilkörper in seine Schließlage verschoben. Der in einer Steuerkammer befindliche Kraftstoff schließt das Ventil. Die Schließgeschwindigkeit wird durch einen Dämpfungskolben eingestellt. Da der Ventilkörper von beiden Seiten beaufschlagt wird, kann durch entsprechende Krafteinstellung auf beiden Seiten des Ventilkörpers der Offnungsquerschnitt für den Durchtritt des Kraftstoffes eingestellt werden. Mit diesem Steuerventil soll bei der zugehörigen Einspritzpumpe eine bestimmte Kennlinie eingestellt werden.

Der Erfindung liegt die Aufgabe zugrunde, das gattungsgemaße Druckbegrenzungsventil so auszubilden, daß es einen einfachen Aufbau hat, kostengünstig hergestellt und einfach angesteuert werden kann.

Diese Aufgabe wird beim gattungsgemäßen Druckbegrenzungsventil erfindungsgemäß mit den kennzeichnenden Merkmalen des Anspruches 1 gelöst.

Beim erfindungsgemäßen Druckbegrenzungsventil wird als Antrieb für den Stößel ein Piezoantrieb eingesetzt. Er hat einen einfachen Aufbau, besteht aus nur wenigen Bauteilen und kann darum kostengünstig gefertigt werden. Zudem läßt sich der Piezoantrieb sehr einfach ansteuern. Der Stößel ist fest mit den Piezoelementen des Piezoantriebes verbunden. Der Piezoantrieb übt über den Stößel auf den Ventilkörper einen Gegendruck aus, der dem Druck des Mediums in der Bohrung entgegenwirkt.

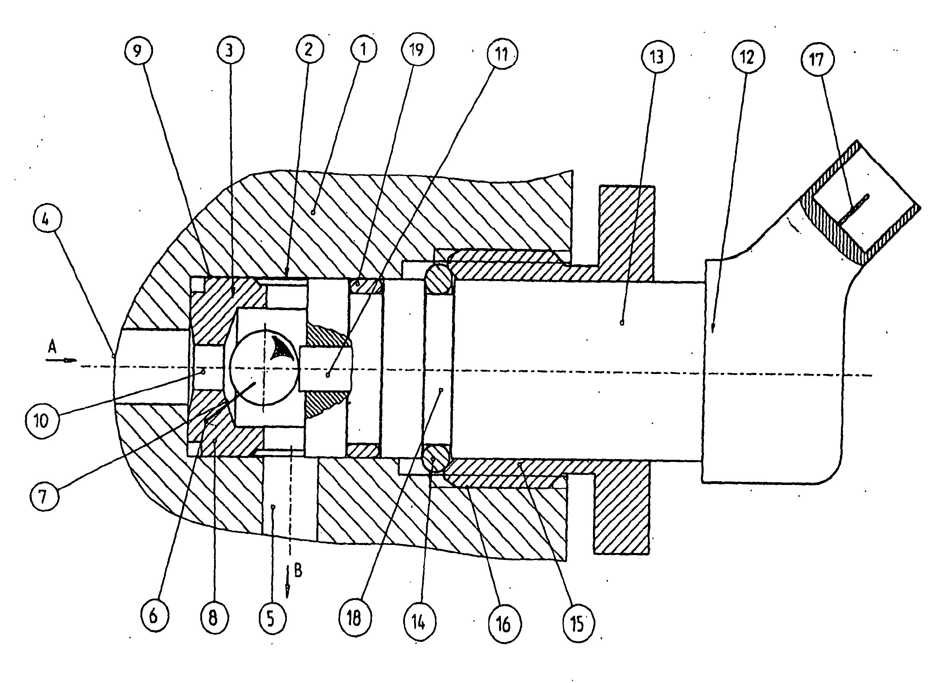

Weitere Merkmale der Erfindung ergeben sich aus den weiteren Ansprüchen, der Beschreibung und der Zeichnung.

Die Erfindung wird anhand eines in der Zeichnung dargestellten Ausführungsbeispieles näher erläutert. Die Zeichnung zeigt im Axialschnitt ein erfindungsgemäßes Druckbegrenzungsventil, das vorzugsweise für Diesel-Hochdruckpumpen vorgesehen ist. Die Hochdruckpumpe hat ein Gehäuse 1, das einen Einbauraum 2 für das Druckbegrenzungsventil 3 aufweist. In den Einbauraum 2 mündet eine Druckbohrung 4 sowie eine Tankbohrung 5. Die beiden Bohrungen 4, 5 sind durch einen Ventilkörper 6 voneinander getrennt, der im Ausführungsbeispiel eine Ventilkugel ist. Sie liegt in der Schließstellung auf einem Ventilsitz 7 auf, der an einem Einbauteil 8 vorgesehen ist. Es liegt an der Wandung 9 des Einbauraumes 2 dichtend an. In den Ventilsitz 7 mündet zentrisch eine Bohrung 10, die kleineren Durchmesser als die beiden Bohrungen 4, 5 hat.

Der Ventilkörper 6 wird durch einen Stößel 11 in seiner Dichtstellung gehalten, der durch einen Piezoantrieb 12 betätigt wird. Der Stößel 11 ist fest mit den Piezoelementen verbunden. Der Piezoantrieb 12 ist in bekannter Weise ausgebildet und hat ein Gehäuse 13, das durch wenigstens einen Dichtring 14 abgedichtet in einer Mutter 15 sitzt, die in einen erweiterten Abschnitt 16 des Einbauraumes 2 geschraubt wird. Der Piezoantrieb 12 ist an seinem aus der Mutter 15 ragenden Teil mit einem Strom/Spannungsanschluß 17 versehen. Das Gehäuse 13 des Piezoantriebes 12 hat eine Ringnut 18 zur Aufnahme des Dichtringes 14 und ragt in den das Einbauteil 8 aufnehmenden Teil des Einbauraumes 2. Innerhalb dieses Teils des Einbauraumes 2 ist das Gehäuse 13 durch einen weiteren Dichtring 19 abgedichtet, der dichtend an der Innenwand 9 dieses Teils des Einbauraumes 2 anliegt.

Durch Bestromen des Piezoantriebes 12 wird der Stößel 11 in Anlage an den Ventilkörper 6 gebracht, der dadurch dichtend am Ventilsitz 7 anliegt und die Bohrung 10 verschließt. Die Kraft, mit welcher der Stößel 11 den Ventilkörper 6 in seine Schließstellung drückt, kann über die Strom/Spannungshöhe variabel eingestellt werden.

Solange der in der Druckbohrung 4 herrschende Druck des Mediums geringer ist als der vom Stößel 11 auf den Ventilkörper 6 ausgeübte Druck, bleibt die Bohrung 10 geschlossen. Sobald jedoch der Druck des Mediums in der Bohrung 4 den auf den Ventilkörper 6 ausgeübten Druck überschreitet, wird der Ventilkörper 6 gegen den vom Piezoantrieb 12 ausgeübten Druck abgehoben, so daß das Medium aus der Bohrung 4 über die Bohrung 10 in die Tankbohrung 5 gelangen kann. Somit kann ein Überdruck in der Druckbohrung 4 zuverlässig abgebaut werden. Das Medium strömt über die Tankbohrung 5 zum Tank. Sobald der Druck des Mediums in der Bohrung 4 kleiner ist als der vom Stößel 11 ausgeübte Gegendruck, wird der Ventilkörper 6 wieder in seine Schließstellung gedrückt, in der er die Bohrung 10 verschließt.

Das beschriebene Proportional-Druckbegrenzungsventil wird bevorzugt für eine Diesel-Hochdruckpumpe eingesetzt. Für die Herstellung dieses Druckbegrenzungsventils sind nur geringe Kosten erforderlich, da der Piezoantrieb 12 der Injektorventile der Hochdruckpumpe verwendet werden kann. Durch den Einsatz des Piezoantriebes 12 wird die Zahl der Bauelemente des Druckbegrenzungsventils verringert. Da der Piezoantrieb 12 nur geringe Baugröße hat, hat auch das Druckbegrenzungsventil eine entsprechend geringe Baugröße. Die Piezoelemente des Piezoantriebes 12 haben eine sehr kurze Reaktionszeit, wodurch sich eine hohe Stabilität des Druckbegrenzungsventils ergibt. Die Ansteuerung des Piezoantriebes 12 ist analog oder digital möglich. Aufgrund der Verwendung des Piezoantriebes 12 beträgt die Hysterese 0, da der Stößel 11 nur durch die Piezoelemente einseitig eine Kraft erfährt. Eine Begrenzung des Zulaufquerschnittes der Bohrung 4 ist nicht erforderlich. Da die Piezoelemente eine sehr kurze Reaktionszeit haben, zeichnet sich das Druckbegrenzungsventil durch eine hohe Dynamik aus. Es kann, wie im Ausführungsbeispiel, unmittelbar in das Gehäuse 1 der Pumpe eingesetzt werden. Da der Piezoantrieb 12 mittels der Mutter 15 in das Pumpengehäuse 1 geschraubt wird, kann der Piezoantrieb 12 im Bedarfsfall einfach ausgetauscht werden. Zur Ansteuerung des Piezoantriebes 12 kann die Elektronik der Injektorsteuerung der Diesel-Hochdruckpumpe herangezogen werden. Auch kann die gleiche Spannung wie bei der Injektorsteuerung für den Betrieb des Piezoantriebes 12 verwendet werden. Das Druckbegrenzungsventil hat infolge seiner kompakten Abmessungen und seiner geringen Zahl von Bauteilen in vorteilhafter Weise nur geringes Gewicht. Das Druckbegrenzungsventil kann darüber hinaus im eingebauten Zustand geprüft werden, da eine nachträgliche Justierung eines Polabstandes, wie bei elektromagnetisch angesteuertem Stößel, nicht notwendig ist. Die Piezoelemente haben infolge ihrer Restladung noch eine Haltedruckfunktion, d.h. der Stößel 11 wird auch ohne Anlegen einer elektrischen Spannung an den Piezoantrieb 12 gegen den Ventilkörper 6 gedrückt, so daß dieser in der Schließstellung gehalten wird, wenn der Piezoantrieb 12 nicht bestromt wird. Bei den herkömmlichen Proportional-Druckbegrenzungsventilen wird diese Haltedruckfunktion durch die Federvorspannung erzielt, mit der der Stößel bei ausgeschaltetem Elektromagneten gegen den Ventilkörper gedrückt wird. Hierbei bereiten Toleranzen in der Federvorspannung Probleme bei der Haltedruckfunktion. Solche Probleme treten beim Piezoantrieb 12 infolge der Restladung der Piezoelemente auch bei nicht bestromtem Piezoantrieb 12 nicht auf.

## Patentansprüche

1. Druckbegrenzungsventil, insbesondere für Diesel-Hochdruckpumpen von Einspritzvorrichtungen in Kraftfahrzeugen, mit einem Ventilkörper (6), der durch einen Stößel (11) eines Piezoelemente aufweisenden Piezoantriebes (12) in einer Schließlage gehalten wird, in der der Ventilkörper (6) eine Bohrung (10), in der ein Medium unter Druck steht, gegen eine druckentlastete Bohrung (5) sperrt,
**dadurch gekennzeichnet, daß** der Stößel (11) fest mit den Piezoelementen des Piezoantriebes (12) verbunden ist, und daß der Ventilkörper (6) die Bohrung (10) öffnet, wenn der Druck des Mediums in der Bohrung (10) größer ist als der vom Piezoantrieb (12) über den Stößel (11) auf den Ventilkörper (6) ausgeübte Gegendruck, und daß der Ventilkörper (6) die Bohrung (10) schließt, wenn der Druck des Mediums in der Bohrung kleiner ist als ein durch den Piezoantrieb (12) auf den Ventilkörper (6) ausgeübter Gegendruck.

2. Druckbegrenzungsventil nach Anspruch 1,
**dadurch gekennzeichnet, daß** der Piezoantrieb (12) in ein Gehäuse (1) der Pumpe eingesetzt ist.

3. Druckbegrenzungsventil nach Anspruch 1 oder 2,
**dadurch gekennzeichnet, daß** das Gehäuse (1) der Pumpe einen Einbauraum (2) aufweist, in den der Piezoantrieb (12) mittels eines Schraubelementes (15) einschraubbar ist.

4. Druckbegrenzungsventil nach Anspruch 3,
**dadurch gekennzeichnet, daß** das Schraubelement (15) eine Mutter ist, in die der Piezoantrieb (12) eingesetzt ist.

5. Druckbegrenzungsventil nach einem der Ansprüche 1 bis 4,
**dadurch gekennzeichnet, daß** in den Einbauraum (2) des Pumpengehäuses (1) ein Einsatzteil (8) eingesetzt ist, das einen Ventilsitz (7) für den Ventilkörper (6) aufweist.

6. Druckbegrenzungsventil nach einem der Ansprüche 1 bis 5,
**dadurch gekennzeichnet, daß** der Piezoantrieb (12) durch eine Injektorsteuerung ansteuerbar ist, mit der Einspritzventile der Einspritzvorrichtung ansteuerbar sind.

7. Druckbegrenzungsventil nach einem der Ansprüche 1 bis 6,
**dadurch gekennzeichnet, daß** das Ventil ein Proportional-Druckbegrenzungsventil ist.

## Revendications

1. Soupape de limitation de pression, en particulier pour pompes diesel haute pression de systèmes d'injection dans des véhicules, avec un corps de soupape (6) maintenu dans une position fermée dans laquelle le corps de soupape (6) bloque un alésage (10) contenant un milieu maintenu sous pression contre un alésage (5) détendu au moyen d'un piston (11) d'entraînement piézoélectrique (12) muni d'éléments piézoélectriques,
**caractérisée en ce que** le piston (11) est relié fixement aux éléments piézoélectriques de l'entraînement piézoélectrique (12) et que le corps de soupape (6) ouvre l'alésage (10) lorsque la pression du milieu situé dans l'alésage (10) est supérieure à celle de la contre-pression exercée par l'entraînement piézoélectrique (12) sur le corps de soupape (6) via le piston (11) et que le corps de soupape (6) ferme l'alésage (10) lorsque la pression du milieu situé dans l'alésage est inférieure à la contre-pression exercée par l'entraînement piézoélectrique (12) sur le corps de soupape (6).

2. Soupape de limitation de pression selon la revendication 1,
**caractérisée en ce que** l'entraînement piézoélectrique (12) est disposé dans un boîtier (1) de la pompe.

3. Soupape de limitation de pression selon la revendication 1 ou 2,
**caractérisée en ce que** le boîtier (1) de la pompe est muni d'un logement (2) dans lequel l'entraînement piézoélectrique (12) peut être vissé à l'aide d'un élément de vissage (15).

4. Soupape de limitation de pression selon la revendication 3,
**caractérisée en ce que** l'élément de vissage (15) est un écrou dans lequel l'entraînement piézoélectrique (12) est disposé.

5. Soupape de limitation de pression selon l'une quelconque des revendications 1 à 4,
**caractérisée en ce qu'**une pièce rapportée (8) munie d'un siège de soupape (7) pour le corps de soupape (6) est disposée dans le logement (2) du boîtier de pompe (1).

6. Soupape de limitation de pression selon l'une quelconque des revendications 1 à 5,
**caractérisée en ce que** l'entraînement piézoélectrique (12) peut être commandé par une commande d'injection pouvant commander les soupapes d'injection du système d'injection.

7. Soupape de limitation de pression selon l'une quelconque des revendications 1 à 6,
**caractérisée en ce que** la soupape est une soupape de limitation de pression proportionnelle.

## Claims

1. Pressure relief valve, in particular for high-pressure diesel pumps of injection devices in motor vehicles, having a valve body (6), which by means of a tappet (11) of a piezodrive (12) comprising piezoelements is held in a closed position, in which the valve body (6) blocks off a bore (10), in which a medium is under pressure, from a pressure-relieved bore (5),
**characterized in that** the tappet (11) is firmly connected to the piezoelements of the piezodrive (12), and that the valve body (6) opens the bore (10) when the pressure of the medium in the bore (10) is greater than the counterpressure exerted by the piezodrive (12) via the tappet (11) on the valve body (6), and that the valve body (6) closes the bore (10) when the pressure of the medium in the bore is lower than a counterpressure exerted by the piezodrive (12) on the valve body (6).

2. Pressure relief valve according to claim 1,
**characterized in that** the piezodrive (12) is inserted into a housing (1) of the pump.

3. Pressure relief valve according to claim 1 or 2,
**characterized in that** the housing (1) of the pump has an installation space (2), into which the piezodrive (12) is screwable by means of a screw element (15).

4. Pressure relief valve according to claim 3,
**characterized in that** the screw element (15) is a nut, into which the piezodrive (12) is inserted.

5. Pressure relief valve according to one of claims 1 to 4,
**characterized in that** an insert part (8), which has a valve seat (7) for the valve body (6), is inserted into the installation space (2) of the pump housing (1).

6. Pressure relief valve according to one of claims 1 to 5,
**characterized in that** the piezodrive (12) is controllable by means of an injector control unit, by which injection valves of the injection device are controllable.

7. Pressure relief valve according to one of claims 1 to 6,
**characterized in that** the valve is a proportional pressure relief valve.
